Europäisches Patentamt

European Patent Office

Office européen des brevets

(11) Publication number: 0 511 024 A2

# EUROPEAN PATENT APPLICATION

(21) Application number: 92303774.1

(22) Date of filing: 27.04.92

(51) Int. Cl.5: C12M 1/20, G01N 33/18

(30) Priority: 26.04.91 GB 9108944

(43) Date of publication of application:
28.10.92 Bulletin 92/44

(84) Designated Contracting States:
AT BE CH DE DK ES FR GB GR IT LI LU MC
NL PT SE

(71) Applicant: SOUTH WEST WATER PLC
Peninsula House, Rydon Lane
Exeter, EX2 7HR(GB)

(72) Inventor: Boyle,John Davidson
Fordton Cottage Fordton Crediton
Devon EX17 3DH(GB)

(74) Representative: Jones, Michael Raymond
HASELTINE LAKE & CO. Hazlitt House 28
Southampton Buildings Chancery Lane
London WC2A 1AT(GB)

(54) A method of, and apparatus for, continuously monitoring the level of a constituent of a flow.

(57) The method comprises passing a flow of fluid to be monitored through a flow reservoir (2) at a predetermined flow rate, so that living organisms already naturally present in the flow may be cultured on the exposed surfaces of the flow reservoir (2). Once a stable colony of organisms has been established in the flow reservoir (2), the instantaneous rate of oxygen assimilation by the organisms in the reservoir (2) is measured, in order to determine the level of dissolved impurities in the flow. In a preferred embodiment of the invention, the flow reservoir (2) contains a rotor (14) onto which the organisms are cultured. The rotor (14) comprises a series of horizontally disposed discs (54) which are rotated and to which the organisms attach, the discs (54) being provided with elongate slots (58) which provide additional flow between successive discs (54).

FIG.1.

This invention relates to a method of, and apparatus for, continuously monitoring the level of a constituent of a flow.

Conventionally, many parameters can be involved in water quality measurement, ranging from biochemical oxygen demand (BOD), pH and conductivity, to chemical analysis for specific impurities. The traditional method of measuring BOD involves the incubation of a water sample for five days, at 20°C, in the dark and the determination of the change of dissolved oxygen concentration during that period. This method has the advantage that the polluting potential of most effluents containing organic materials can be determined from this relatively simple test. It is however virtually useless as a method for the on-line control of waste water treatment works or continuous water quality monitoring. Alternative chemical methods for the determination of, for example, the organic carbon content or the chemical oxygen demand have been developed and are sometimes deployed.

When river water quality is monitored for its suitability for treatment in a water treatment works or otherwise, there are a range of different operational problems which may require intervention or further investigation. One problem involves the upstream escape of toxic materials, pesticides or industrial or domestic chemicals into the river catchment. A second problem involves the release into the catchment of agricultural wastes or silage liquids. In both these situations, the traditional method of measuring biochemical oxygen demand (BOD) is too slow to alert the water treatment staff to the possible dangers of contamination.

It has been recognised for some time that microorganisms contained in biofilms can metabolise organic material rapidly; and Strand and Calcin (1984) described the use of a biofilm electrode for rapid BOD measurement. Respirometers, usually containing suspended detached organisms, have been used for monitoring the activity of organisms, and their use in sewage and other waste water treatment works has been described by R.M. Arthur and many others. However, although these prior systems are fast enough to alert water management staff of possible contamination before the contamination reaches the treatment works, they often do not provide a continuous assessment of water quality.

According to one aspect of the present invention, there is provided a method of continuously monitoring the level of a constituent of a flow, comprising the steps of:

passing the flow at a predetermined flow rate through a flow reservoir;

culturing living organisms already naturally present in the flow in the flow reservoir; and

measuring the instantaneous rate of oxygen assimilation by the organisms in the reservoir.

According to a second aspect of the present invention, there is provided apparatus for continuously monitoring the level of a constituent of a flow, comprising:

a flow reservoir through which a flow is passed at a predetermined flow rate, the surfaces of the flow reservoir exposed to the flow being covered by a culture of organisms already naturally present in the flow; and

means for measuring the instantaneous rate of oxygen assimilation by the organisms in the reservoir.

Preferably, some of the organisms in the flow reservoir exposed to the flow are caused to rotate, oscillate or reciprocate relative to the reservoir as a whole. In this way, a stable flow over the organisms can be maintained even when the flow into or out of the reservoir is stopped. As an alternative to rotating, oscillating or reciprocating the organisms in the flow reservoir, pump means may be used to create a flow over the organisms.

Preferably the velocity of the flow relative to the organisms is chosen so that mass transfer of nutrients and oxygen to organisms attached to the surfaces within the flow reservoir is favoured over mass transfer to organisms suspended in the flow.

Preferably the apparatus and method of the present invention are used to monitor the biological quality of natural river waters. However, the present apparatus and method may also be used to monitor changes in water quality of untreated, partially treated or fully treated sewage or waste waters containing organic material.

In a preferred embodiment, the flow reservoir may contain a rotor which is rotated relative to the flow reservoir. The rotor may comprise a series of horizontally disposed discs to which the organisms may attach, the discs being provided with elongate flow slots which provide additional flow between successive discs. Preferably, the surfaces of the rotor and/or of the biofilm reactor which are exposed to the flow are provided with grooves or other surface roughening.

Preferably, the rate of oxygen assimilation is determined by measuring the level of dissolved oxygen in the flow. The oxygen assimilation may be assessed by monitoring the rate of decrease of dissolved oxygen in the flow when the reservoir is temporarily isolated from its input and output supplies. A single oxygen transducer may be used in such an arrangement.

For a better understanding of the present invention and to show how it may be carried into effect reference will now be made, by way of example, to the accompanying drawings in which:

Figure 1 shows a cut-away side view of a biofilm reactor forming part of the apparatus of the present invention, with one embodiment of rotor;
Figure 2 shows a plan view of the biofilm reactor of Figure 1;
Figure 3 is a view on line III-III in Figure 1;
Figure 4 is a plan view of the lid of the reactor of Figure 1;
Figure 5 shows the drive mechanism for three reactors connected in series, forming part of the apparatus of the present invention;
Figure 6 shows a side view, on an enlarged scale, of a different type of rotor;
Figures 7(a) to (c) show plan views of alternative types of rotor plate.
Figure 8 is an approximately full scale side view of a third type of rotor;
Figure 9 is a block diagram showing a first process for determining the rate of oxygen assimilation in a flow;
Figure 10 is a block diagram showing a second process for determining the rate of oxygen assimilation in a flow; and
Figure 11 is a block diagram showing a third process for determining the rate of oxygen assimilation in a flow.

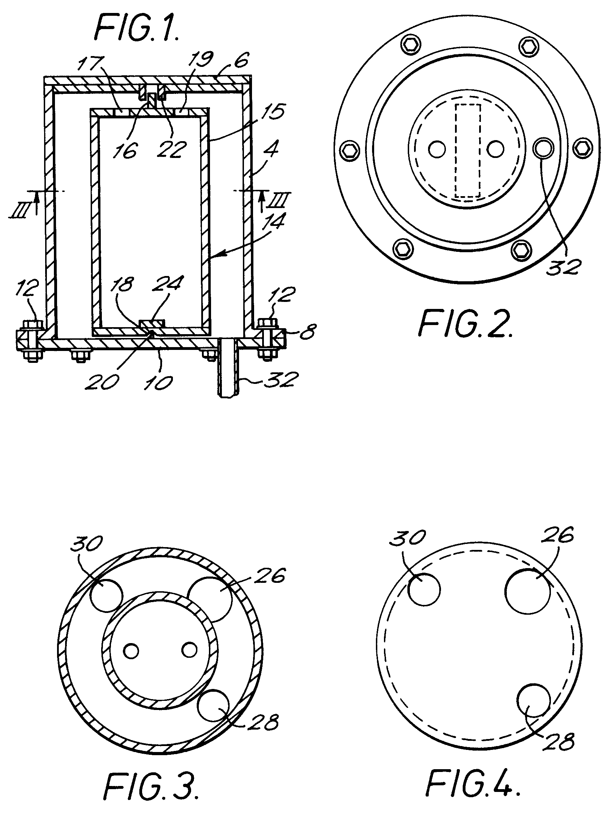

Referring to the drawings, Figure 1 shows a biofilm reactor 2. The reactor 2 comprises a cylindrical outer casing 4 provided with a circular lid 6. The base of the outer casing 4 is provided with a flange 8 which abuts a circular base plate 10 of the reactor 2. A plurality of bolts 12 passing through the flange 8 hold the outer casing 4 to the base plate 10.

A rotor 14 is rotatably mounted between the lid 6 and the base plate 10. The upper end of the rotor 14 is provided with a projecting pin 16 and the lower end of the rotor 14 is provided with a recess 18 at the centre of its lower face. The recess 18 engages a pin 20 projecting at right angles from the upper surface of the base plate 10, and the pin 16 is received in a cylindrical housing 22 projecting at right angles from the lower surface of the lid 6. A rectangular ferrous bar or magnet 24 is fixed on the inside surface of the bottom of the rotor 14.

As shown best in Figure 3, inlet orifices 28 and 30 and an additional orifice 26 are provided in the lid 6. An outlet pipe 32 projects from the base plate 10 of the biofilm reactor 2 at a position offset from its centre.

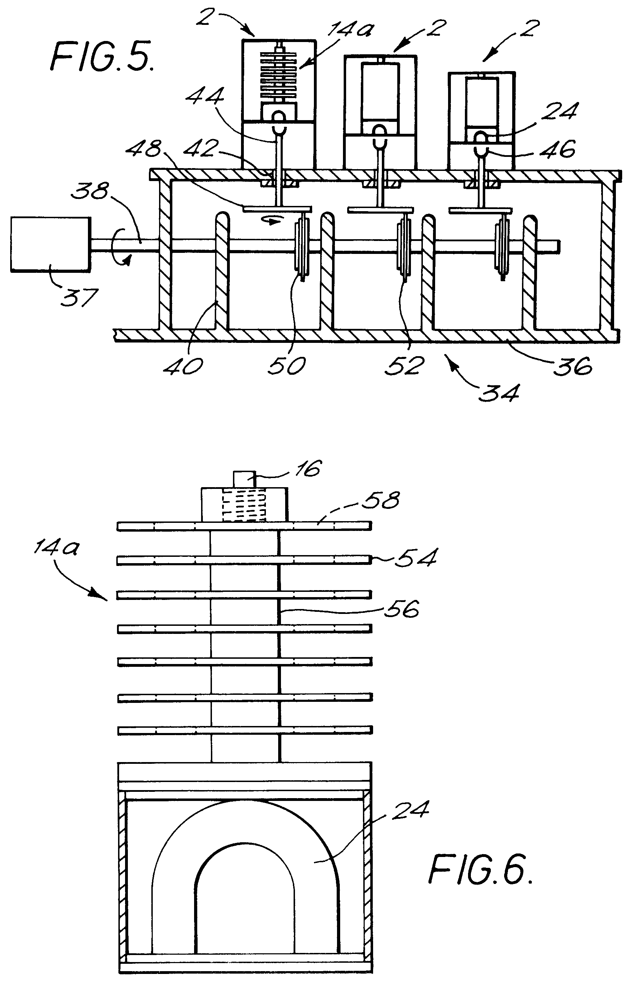

Figure 5 shows three biofilm reactors mounted in series on a box shaped housing 36 of a drive assembly 34. A drive shaft 38 driven by a drive mechanism 37 is mounted inside the housing 36 on brackets 40 projecting upwards from the inside lower surface of the housing 36. The brackets may be bolted, glued, welded or integrally formed with the housing 36. The drive shaft 38 runs parallel to the upper and lower surfaces of the housing 36 and is free to rotate in bearings 39 in the brackets 40.

The biofilm reactors 2 are fixed to the upper member of the housing 36. Holes 42 are provided through the upper member of the housing 36 directly below the centre of each biofilm reactor 2. Shafts 44 project through the holes 42 at right angles to the upper member of the housing 36 and are provided at their upper ends with magnets 46 which are held close to or abut the lower surface of the base plate 10 of each biofilm reactor 2. The lower end of each shaft 44 is connected at right angles to a circular drive plate 48. The shafts 44 are free to rotate in bearings mounted in the housing 36. Drive wheels 50, provided with tyres 52, are mounted on the drive shaft 38 below each circular drive plate 48, off-set from the centre of each biofilm reactor 2. The drive wheels 50 engage the circular drive plates 48 on their lower surface.

The drive wheels 50 may be displaced along the drive shaft 38 so that each drive wheels 50 may engage its respective drive plate 48 at any desired location. By varying the displacement of the point of contact of each drive wheel 50 from the centre of its respective drive plate 48, the effective gear ratio between the drive wheel 50 and the drive plate 48 may be varied, so as to adjust the speed of rotation of each individual rotor 14. Once a suitable gear ratio is established the drive wheel is fixed to the drive shaft 38.

In the first embodiment of the biofilm reactor 2 as shown in Figure 1 the rotor 14 comprises a hollow cylindrical body 15. The outside diameter of the hollow cylindrical body 15 is approximately 60% of the inside diameter of the outer casing 4, so that a flow channel is provided between the outside surface of the hollow cylindrical body 15 and the inside surface of the outer casing 14. The surfaces of the rotor and/or of the biofilm reactor 2 which are exposed to the flow may be machined with grooves or provided with other surface roughening (not shown) to alter the flow over the surface and/or to provide a roughened surface on which the organisms can attach more easily, so that a stable colony is established more quickly and reliably.

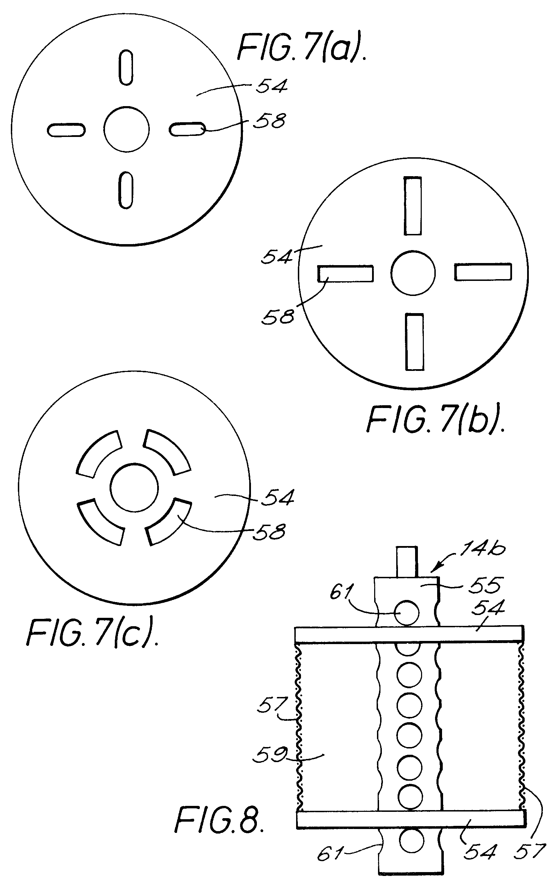

In a second embodiment of the biofilm reactor 2 the rotor 14a, as shown in Figure 6, comprises a series of equally spaced plates 54 which project at right angles from a substantially vertically aligned central shaft 56. In the base of this multiplate rotor 14a is mounted a magnet or ferrous bar 24. Figure 7(a) to 7(c) show plan views of alternative types of rotor plate 54. The plates 54 may be imperforate or may be provided with a series of symmetrically disposed flow slots 58. The flow slots 58 may comprise radially aligned rectangular orifices with curved ends (Figure 7(a)) or straight ends (Figures 7(b)), or may comprise circumferentially aligned curved orifices (Figure 7(c)).

In a third embodiment of the biofilm reactor 2,

as shown in Figure 8, the rotor 14b comprises a closed perforated "basket" containing small stones or moulded man-made materials, with an external diameter similar to that of the rotor 14a. The rotor 14b has a hollow central cylindrical core 55 which is provided along its length with circular perforations 61 of approximately 8mm diameter. Projecting from the core 55 at right angles, at the top and bottom of the rotor 14b, are circular plates 54. Mesh 57 is tied around the rotor 14b between the circular plates 54, defining a cylindrical space 59 between the mesh 57 and the central cylindrical core 55. Stones or moulded man made materials fill the central cylindrical space 59. The rotor 14b may be spun so that the contents of the basket are forced, as through the impeller of a pump, past the surfaces of the material in the basket, on which biofilm grows. In this embodiment, the small stones or moulded man-made materials in the rotor are subjected to very similar conditions to those encountered by pebbles at the bottom of a stream or river.

In operation, rotation of the drive shaft 38 by the drive mechanism 37 causes rotation of the drive wheels 50. Drive is transmitted via the tyres 52 to the circular drive plates 48 which rotate together with the shafts 44 and magnets 46. Since each magnet 46 lies beneath a ferrous bar or magnet 24 at the base of each rotor 14, 14a in the biofilm reactors 2, attraction of the magnet 46 to the magnet 24 provides a driving connection between the rotating magnet and the rotor 14, 14a. Thus each rotor 14, 14a is caused to rotate relative to its respective reactor 2 while the contents of the biofilm reactors 2 are sealed from the drive assembly 34.

The fluid under investigation is introduced into each biofilm reactor 2 through the inlet orifices 28, 30 in the lid of the biofilm reactor 2. With the first embodiment of the rotor 14 as shown in Figure 1 fluid then flows around the outside of the rotor 14 and is forms eddies between the rotating outside surface of the rotor 14 and the inside surface of the outer casing 4.

In the embodiment of the rotor 14a as shown in Figure 6, flow entering the biofilm reactor 2 through the inlet orifices 28, 30 passes in sequence over the surface of each plate 54 and can also pass between plates through the extended slots 58 formed through each plate 54. The multi-plate arrangement of the second embodiment of the rotor 14a provides a greater surface area over which the flow can pass.

In order to establish a healthy and stable body of organisms, a typical biofilm reactor 2 of 1 litre volume should be provided with a steady flow of fluid preferably travelling at approximately 50 to 90 cm per second for approximately 3 to 4 days. The flow velocity relative to the surface should not be allowed to exceed 120 cm per second in order to ensure that colonies of organisms attached to the solid surfaces within the reactor 2 develop in preference to colonies suspended in the flow. The exposure time and flow velocities used will depend to a great extent on the organisms which are to be cultured, and on the temperature at which they are kept. Where the organism cultured is a filamentous bacteria such as Sphaerotilus Natans a well established colony is indicated by an even covering of filaments of up to 1 cm in length ($10^4$ bacterium in line) over all the surfaces within the reactor which are exposed to the flow. Where necessary, additional nutrient can be added through the orifice 26 provided in the lid 6 of the biofilm reactor 2. Once the stable colony of organisms has been established, the rate of oxygen assimilation of the organisms can be determined by one of a number of known processes.

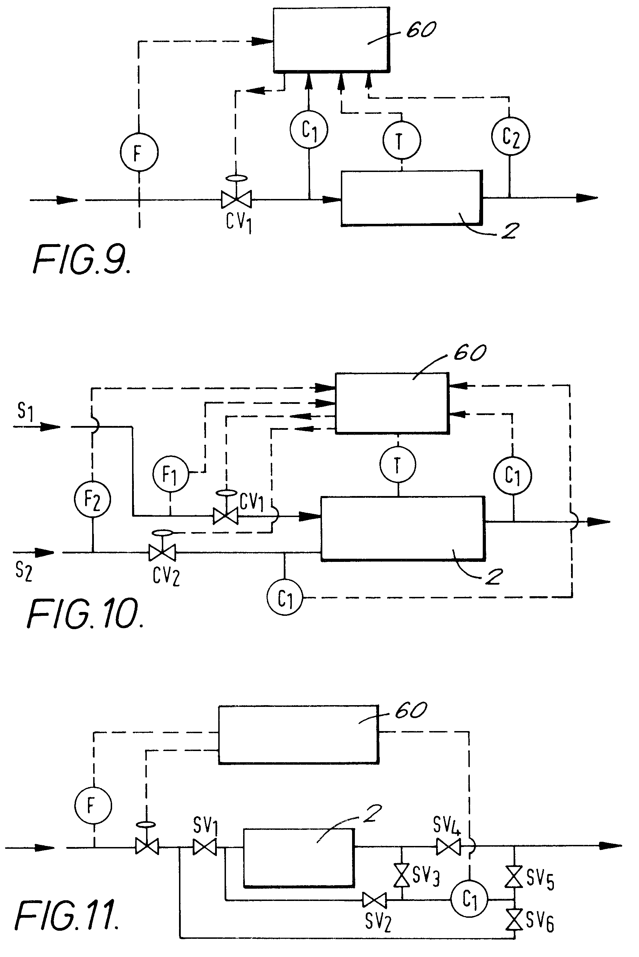

In a first process, as illustrated in Figure 9 a flow of water from a river or other natural water system is pumped into a respirometer 2 at a measured rate F, controlled by a valve CV1. The concentration of dissolved oxygen in the input stream C1 and in the output stream C2 are both measured, as is the temperature T of the water in the respirometer 2. All the measurements, flow, dissolved oxygen and temperature, are input into a computer 60, which calculates the oxygen uptake rate.

A second process as shown in Figure 10, is used when the nutrient (or BOD) concentration in a stream of water from a waste water treatment plant or elsewhere, is above that expected in natural waters. In these circumstances, the flowrate of the waste water stream S1 is measured and the measured value is transmitted to the computer 60 which adjusts the flow remotely by means of control valve CV1. The waste water stream is diluted in the respirometer 2 by a second stream of water S2, whose nutrient content is low and relatively invariant. The flow rate of S2 is measured and may also be adjusted by a second control valve, CV2. The flow rate of diluent water is typically upwards of several times that of the waste stream, depending on the strength of the waste stream. The concentration of dissolved oxygen in the diluent stream C1 and in the stream leaving the respirometer C2 are measured as is the temperature T in the respirometer 2 and transmitted to the computer 60. The flow rates of the two input streams are adjusted by the computer 60 to maintain the measured oxygen uptake rate at a predetermined level.

In a third process, as shown in Figure 11, the same basic system as shown in Figure 9 is used. However, in the system shown in Figure 11 only one dissolved oxygen monitor is used, to avoid any problems with cross referencing between two monitors. The flow through the system is controlled by on/off valves SV1-SV6 which are remotely actuated by the computer 60. These are adjusted so that firstly, with SV1, SV5 and SV3 closed and SV2, SV6 and SV4 open, the dissolved oxygen meter C1 measures the concentration of dissolved oxygen in the feed stream. Then, by opening SV1, SV5 and SV3 and closing SV2, SV6 and SV4, the dissolved oxygen meter C1 measures the dissolved oxygen concentrations in the exit stream. Thus, provided that the dissolved oxygen concentrations in each stream are not changing very rapidly, the oxygen uptake rate can be determined using one oxygen meter C1 only.

In addition to providing continuous data analysis, the computer 60 may also provide control and alarm monitoring.

If flow entering the biofilm reactor 2 includes toxic materials, pesticides or industrial or domestic chemicals, then it is expected that the respiration rate of the reactor organisms will be much reduced; the reactor instrumentation system should therefore indicate possible problems when the respirometric rate drops suddenly.

In addition, where the fluid entering the biofilm reactor contains agricultural waste or silage liquids, there are two possible effects of this on the observed respirometric rate. If the fluid at the intake is heavily contaminated, and contains toxic concentrations of material such as ammonia or hydrogen sulphide, then the respirometric rate will reduce as in the first example. Alternatively, the waste may have become dispersed or decomposed so that the nutrient level, dissolved organic material etc. is raised; in this case the respirometric rate will increase rapidly as the organisms receive the more nutritious fluid; this too may be monitored and the information used to alert the operation staff.

The present invention may also be applied to monitoring the effluent from a waste water treatment works. The effluent is preferably diluted with river water prior to analysis. Provided that the works is running consistently, the monitored respirometric rate should remain within a certain range from day to day. Deviations from this range should alert control or operational staff and can be used in the in line control system for feedback control of the works.

## Claims

1. Apparatus for continuously monitoring the level of a constituent of a flow, comprising:

a flow reservoir through which a flow is passed at a predetermined flow rate, the surfaces of the flow reservoir exposed to the flow being covered by a culture of organism already naturally present in the flow; and

means for measuring the instantaneous rate of oxygen assimilation by the organisms in the reservoir.

2. Apparatus as claimed in claim 1, in which means are provided to cause some of the organisms in the flow reservoir exposed to the flow to rotate, oscillate or reciprocate relative to the reservoir as a whole.

3. Apparatus as claimed in claim 1 or 2, in which pump means are provided to create a flow over the organisms.

4. Apparatus as claimed in any one of claims 1 to 3, in which the velocity of the fluid flow relative to the organisms attached to the surfaces within the flow reservoir is chosen so that mass transfer of nutrients and oxygen to organisms attached to the surfaces within the flow reservoir is favoured over mass transfer to organisms suspended in the flow.

5. Apparatus as claimed in any one of claims 1 to 4, in which the flow reservoir contains a rotor which is rotated relative to the flow reservoir.

6. Apparatus as claimed in claim 5, in which the rotor comprises a series of horizontally disposed discs to which the organisms may attach.

7. Apparatus as claimed in claim 6, in which the discs are provided with elongate flow slots.

8. Apparatus as claimed in any one of claims 1 to 7, in which the rate of oxygen assimilation is measured by a single oxygen transducer which monitors the rate of decrease of dissolved oxygen in the flow when the reservoir is temporarily isolated from its input and output supplies.

9. Apparatus as claimed in any one of the preceding claims, in which surface roughening is provided on the surfaces of the flow reservoir exposed to the flow.

10. A method of continuously monitoring the level of a constituent of a flow, comprising the steps of:

passing the flow at a predetermined flow rate through a flow reservoir;

culturing living organisms already naturally present in the flow in the flow reservoir; and

measuring the instantaneous rate of oxygen assimilation by the organisms in the reservoir.

**11.** A method as claimed in claim 10, in which the rate of oxygen assimilation is determined by measuring the level of dissolved oxygen in the flow.

**12.** A method as claimed in claim 10, in which the rate of oxygen assimilation is assessed by monitoring the rate of decrease of dissolved oxygen in the flow when the reservoir is temporarily isolated from its input and output supplies.

FIG.1.

FIG.2.

FIG.3.

FIG.4.

FIG.5.

FIG.6.

FIG.7(a).

FIG.7(b).

FIG.7(c).

FIG.8.

FIG.9.

FIG.10.

FIG.11.